# EUROPEAN PATENT SPECIFICATION

(11) **EP 1 122 107 B1**
(45) Date of publication and mention of the grant of the patent: **11.04.2007**
(21) Application number: 01200366.1
(22) Date of filing: 01.02.2001
(51) Int. Cl.: B60J 7/00

(54) **Open roof construction for a vehicle**
Konstruktion eines öffnungsfähigen Fahrzeugdaches
Construction d'un toit ouvrant pour véhicule

(30) Priority: 04.02.2000 NL 1014296
(43) Date of publication of application: 08.08.2001
(73) Proprietor: Inalfa Roof Systems Group B.V., 5804 AH Venray (NL)
(72) Inventor: De Torbal, René Fernand Emile, 5644 GA Eindhoven (NL)
(74) Representative: Voncken, Bartholomeus Maria Ch.

(56) References cited:
- EP-A- 0 343 419
- DE-C- 4 311 049
- FR-A- 2 723 612
- US-A- 5 405 184
- US-A- 5 507 547

## Description

The invention relates to an open roof construction for a vehicle, comprising a roof opening which can be closed by means of a movable closure element, wherein means are used for varying the light transmission through the roof opening.

In order to enhance the degree of comfort in a vehicle which is fitted with an open roof construction comprising a roof opening which can be closed by a movable closure element, ways are sought for varying the amount of incident light through the roof opening. Thus Dutch patent application no. 9102116 discloses an open roof construction wherein the closure element consists of a sliding panel, which is provided with a coating that exhibits variable light transmission. Said variable light transmission proves to be advantageous in particular when said panel closes the roof opening entirely or for the greater part. However, when the panel is moved to a position in which it releases the roof opening, the coating exhibiting variable light transmission loses its function.

Document US-A-5.405.184 shows an open roof construction according to the preamble of the main claim in which two superimposed sections of the closure element can move relative to each other for varying the light transmission there though.

Another approach is used in prior art open roof constructions wherein a sun screen is present under the closure element. In those cases the light transmission through the roof opening can be varied by changing the position of the sun screen to a greater or lesser degree, as a result of which said sun screen will cover the roof opening to a greater or lesser degree. In fact the designer opts for a principle whereby the extent of the shade provided by the sun screen is varied. In principle there is no regulation of the light intensity.

It is an object of the present invention to provide an improved open roof construction of the present type.

In accordance with the invention, the open roof construction of the type disclosed e.g. in US-A-5 405 184 is characterized in that a sliding sun screen is present under, and positionable in different positions relative to the closure element, which sun screen at least partially consists of a material that exhibits variable light transmission independent of the position of the sum screen relative to the closure element.

The roof opening can be covered by means of the sun screen to a degree that can be freely selected, and subsequently it is possible in the selected position of the sun screen to vary the light transmission.

According to an embodiment of the invention the sun screen may consist substantially entirely of a material that exhibits variable light transmission, but the sun screen may also comprise a central portion that exhibits variable light transmission and a frame that surrounds said central portion, which frame consists of a material that does not exhibit variable light transmission.

In the latter case an advantageous embodiment may be one wherein the central portion can be detached from the surrounding frame. In this way it is in principle possible to build such a central portion into any conventional sun screen prior to, during and after the fitting of the open roof construction in a vehicle.

The open roof construction according to the invention provides a number of advantages. The construction according to the invention can be used with practically any conventional open roof construction. Since it is no longer the movable closure element itself that comprises a coating or a portion that exhibits variable light transmission, as is the case with the prior art, the design restrictions with regard to said closure element are less stringent. Furthermore, possible damage to the light-transmitting material can be repaired more easily and at lower expense, since it is only necessary at the worst to replace the sun screen; in the prior art, on the other hand, it would be necessary at the worst to replace the entire closure element.

In spite of the fact that the sun screen now consists, at least partially so, of a material that exhibits variable light transmission, said sun screen can continue to perform its other functions, such as acoustic and thermal insulation. This enables the sun screen to provide the same degree of luxury as any other conventional sun screen.

In a special embodiment of the open roof construction according to the invention the light transmission can be varied automatically. This can for example be achieved when the light transmission is varied on the basis of the value of measured quantities inside the vehicle, such as the light intensity or the temperature, for example. When in the latter example the temperature inside the vehicle threatens to rise too high, the degree of light transmission can be reduced automatically, as a result of which the heating influence of the incident light can be reduced.

It is also possible, of course, to vary the light transmission manually. In that case the driver or a passenger of the vehicle can select a degree of light transmission to his or her liking.

An electrochromatic material may be selected as a suitable material exhibiting variable light transmission. Components consisting of such electrochromatic material are already known per se, and they can be used in accordance with the most widely varying specifications.

An inexpensive variant of the open roof construction according to the invention provides an embodiment wherein the material that exhibits variable light transmission consists of polarisation filters arranged in side-by-side relationship, which can be pivoted with respect to each other. As is known per se, the amount of light penetrating through the polarisation filters can be regulated between a maximum value and a minimum value by pivoting the two filters relative to each other.

The invention will be explained in more detail hereafter with reference to the drawing, which shows a number of embodiments of the open roof construction according to the invention.
Fig. 1 is a schematic, longitudinal sectional view of a part of an embodiment of the open roof construction according to the invention;
Fig. 2 also schematically shows, in bottom plan view, an embodiment of a sun screen as used in the open roof construction according to the invention;
Fig. 3 is a view corresponding to Fig. 2 of another embodiment of a sun screen; and
Fig. 4 is a view, likewise corresponding to Fig. 2, of yet another embodiment of a sun screen.

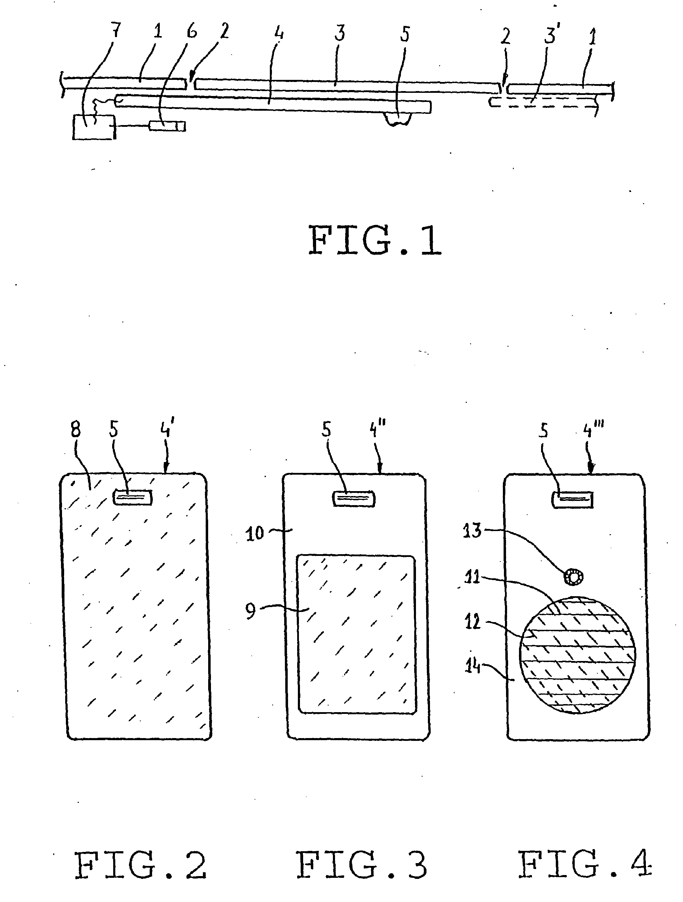

Fig. 1 is a schematic longitudinal sectional view of a part of an open roof construction according to the invention. The figure shows a part of the fixed roof construction 1 of the vehicle. A roof opening 2 has been formed in this fixed roof construction 1, which roof opening can be closed by a movable closure element 3, which consists of a sliding panel in the illustrated embodiment. Said panel 3 can be moved (substantially slid), in a manner which is known per se, by means not shown, to a position 3' which is illustrated in dotted lines, in which position the roof opening 2 is released to a greater or lesser extent.

Present under the fixed roof construction 1 and under panel 3 is a sliding sun screen 4. As is already known per se, said sun screen is capable of sliding movement in a direction substantially parallel to the fixed roof construction 1 and to panel 3, between a retracted position, in which sun screen 4 releases roof opening 2 to a large extent, and an operative position, in which sun screen 4 essentially overlaps the roof opening 2. Sun screen 4 can also take up any position therebetween, of course, depending on the user's wishes.

Sun screen 4 is fitted with a handle 5 in the illustrated embodiment, so that a user will have a good grip on sun screen 4.

In accordance with the invention, sun screen 4 consists at least partially of a material that exhibits variable light transmission. In the exemplary embodiment as shown in Fig. 1, sun screen 4 may for example consist of an electrochromatic material, whose light transmission can be regulated under the influence of an electric current. To this end, again in the embodiment that is shown in Fig. 1, a sensor 6 (a temperature gauge, for example) is present in the interior of the vehicle, which sensor is connected to the sun screen 4. When the control unit 7 determines that the temperature measured by sensor 6 has exceeded a predetermined value, a signal is delivered to the sun screen 4 (in particular the electrochromatic material thereof) to decrease the light transmission thereof. As a result, the incidence of sunlight in the vehicle is reduced, which makes it possible to regulate the temperature inside the vehicle.

Within this framework it is noted that the control unit can also drive other means for regulating the temperature, such as ventilating means.

Another, non-limitative, example of a sensor 6 is called a photometer, by means of which the intensity of the light inside the vehicle is measured.

The use of sensor 6 and control unit 7 makes it possible to effect automatic variation of the light transmission of sun screen 4. It is also possible, of course, for the light transmission to be manually varied by the driver or by a passenger of the vehicle. When a sun screen 4 consisting of an electrochromatic material is used, a desired value can be adjusted for the current or the voltage that is applied to the sun screen by means of an adjusting element, for example a potentiometer.

Figs. 2 - 4 show three possible variants of embodiments of the sun screen. It is noted that also other embodiments fall within the scope of the invention, of course.

Fig. 2 shows an embodiment of a sun screen 4', which consists in its entirety of a material that exhibits variable light transmission. This may be an electrochromatic or a photochromatic material, for example.

In the embodiment that is shown in Fig. 3 the sun screen 4'' consists of a central portion 9, which is made of a material that exhibits variable light transmission, and a frame 10 surrounding said central portion, which is made of a material that does not exhibit variable light transmission.

Finally, in the embodiment according to Fig. 4 two polarisation filters that can be pivoted with respect to each other are arranged in side-by-side relationship in the sun screen 4'''; said filters are only schematically indicated by means of full hatched lines 11 and dotted hatched lines 12. Since each polarisation filter has a specific polarisation direction, as is well-known, the overall light transmission through the polarisation filters 11 and 12 can be varied between a value of substantially zero and a maximum value by pivoting the two filters 11 and 12 with respect to each other. In the illustrated embodiment a manually operated rotary knob 13 is used for pivoting the polarisation filters 11 and 12 with respect to each other. Similar to that which has been noted with regard to the embodiment of Fig. 1, it is also possible to automate the pivoting of the polarisation filters, and to use an electric motor, for example, which is driven by a control unit that receives a signal from a sensor.

Also in the embodiments that are shown in Figs. 2 and 3 the variation of the light transmission of the light-transmitting material 8 and 9, respectively, can take place automatically as well as manually. Also combinations of automatic and manual variation are possible.

In the embodiments that are shown in Figs. 3 and 4, it may be possible to detach the portion consisting of light-transmitting material (material 9 and polarisation filters 11 and 12, respectively) from the surrounding frame 10 and 14, respectively, of the sun screen. In this manner a possibility is created to replace the portion consisting of a material exhibiting variable light transmission quickly and easily if said portion should be damaged.

The open roof construction according to the invention makes it possible to adapt existing open roof constructions afterwards in a quick and simple manner in accordance with the specifications of the present invention. Referring by way of example to the embodiment of Fig. 3, it is only necessary to form a central opening in a conventional sun screen that has already been mounted, in which opening the material exhibiting variable light transmission is fitted. If said material is an electrochromatic material, the only thing that needs to be done in that case is to connect a power supply line to the sun screen. In that case a control unit (automatic or manual) that may be required can be mounted at a suitable location in the vehicle, for example in the roof upholstery.

The invention is not restricted to the above-described embodiments, which can be varied in several ways without departing from the scope of the invention, provided the invention remains as defined in the claims.

## Claims

1. An open roof construction for a vehicle, comprising a roof opening (2) which can be closed by means of a movable closure element (3), wherein means are used for varying the light transmission through the roof opening (2), **characterized in that** a sliding sun screen (4) is present under and positionable in different positions relative to the closure element (3), which sun screen (4) at least partially consists of a material that exhibits variable light transmission independent of the position of the sun screen (4) relative to the closure element (3).

2. An open roof construction according to claim 1, **characterized in that** the sun screen (4) consists substantially entirely of a material that exhibits variable light transmission

3. An open roof construction according to claim 1, **characterized in that** the sun screen (4) comprises a central portion (9) that exhibits variable light transmission and a frame (10) that surrounds said central portion, which frame consists of a material that does not exhibit variable light transmission.

4. An open roof construction according to claim 3, **characterized in that** the central portion (9) can be detached from the surrounding portion (10).

5. An open roof construction according to any one of the preceding claims, **characterized in that** the light transmission can be varied automatically.

6. An open roof construction according to claim 5, **characterized in that** the light transmission is varied on the basis of the value of measured quantities inside the vehicle, such as the light intensity or the temperature, for example.

7. An open roof construction according to any one of the preceding claims, **characterized in that** the light transmission can be varied manually.

8. An open roof construction according to any one of the preceding claims, **characterized in that** the material exhibiting variable light transmission is an electrochromatic material.

9. An open roof construction according to any one of the claims 1 - 7, **characterized in that** the material that exhibits variable light transmission consists of polarisation filters (11, 12) arranged in side-by-side relationship, which can be pivoted with respect to each other.

## Patentansprüche

1. Offendach-Konstruktion für ein Fahrzeug, welche aufweist: eine Dachöffnung (2), welche mittels eines bewegbaren Schließelements (3) geschlossen werden kann, wobei Mittel zum Variieren der Lichtdurchlässigkeit durch die Dachöffnung (2) hindurch verwendet werden, **dadurch gekennzeichnet, dass** eine verschiebbare Sonnenblende (4) unter dem und in unterschiedlichen Positionen bezüglich des Schließelements (3) positionierbar ist, welche Sonnenblende (4) wenigstens teilweise aus einem Material besteht, welche eine veränderliche Lichtdurchlässigkeit unabhängig von der Position der Sonnenblende (4) bezüglich des Schließelements (3) aufweist.

2. Offendach-Konstruktion gemäß Anspruch 1, **dadurch gekennzeichnet, dass** die Sonnenblende (4) im Wesentlichen vollständig aus einem Material besteht, welches eine veränderliche Lichtdurchlässigkeit aufweist.

3. Offendach-Konstruktion gemäß Anspruch 1, **dadurch gekennzeichnet, dass** die Sonnenblende (4) einen Zentralabschnitt (9), welcher eine veränderliche Lichtdurchlässigkeit aufweist, und einen Rahmen (10) aufweist, welcher aus einem Material besteht, welches keine veränderliche Lichtdurchlässigkeit aufweist.

4. Offendach-Konstruktion gemäß Anspruch 3, **dadurch gekennzeichnet, dass** der Zentralabschnitt (9) aus dem umgebenden Abschnitt (10) abgelöst werden kann.

5. Offendach-Konstruktion gemäß einem der vorhergehenden Ansprüche, **dadurch gekennzeichnet, dass** die Lichtdurchlässigkeit automatisch variiert werden kann.

6. Offendach-Konstruktion gemäß Anspruch 5, **dadurch gekennzeichnet, dass** die Lichtdurchlässigkeit auf der Basis des Wertes von Messgrößen innerhalb des Fahrzeugs variiert wird, wie beispielsweise der Lichtintensität oder der Temperatur.

7. Offendach-Konstruktion gemäß einem der vorhergehenden Ansprüche, **dadurch gekennzeichnet, dass** die Lichtintensität manuell variiert werden kann.

8. Offendach-Konstruktion gemäß einem der vorhergehenden Ansprüche, **dadurch gekennzeichnet, dass** das Material, welches die veränderliche Lichtdurchlässigkeit aufweist, ein elektrochromatisches Material ist.

9. Offendach-Konstruktion gemäß einem der Ansprüche 1 - 7, **dadurch gekennzeichnet, dass** das Material, welches die veränderliche Lichtdurchlässigkeit aufweist, aus Polarisationsfiltern (11, 12) besteht, welche in einer Seitean-Seite-Beziehung angeordnet sind und welche zueinander geschwenkt werden können.

## Revendications

1. Ensemble de toit ouvrant pour un véhicule, comprenant une ouverture de toit (2) qui peut être fermée au moyen d'un élément de fermeture mobile (3), dans lequel des moyens sont utilisés pour faire varier la transmission de lumière à travers l'ouverture de toit (2), **caractérisé en ce qu'**un pare-soleil coulissant (4) est présent sous l'élément de fermeture (3) et pouvant être positionné dans différentes positions par rapport à l'élément de fermeture (3), lequel pare-soleil (4) consiste, au moins partiellement, en un matériau qui présente une transmission à la lumière variable, indépendante de la position du pare-soleil (4) par rapport à l'élément de fermeture (3).

2. Ensemble de toit ouvrant selon la revendication 1, **caractérisé en ce que** le pare-soleil (4) consiste sensiblement entièrement en un matériau qui présente une transmission de lumière variable.

3. Ensemble de toit ouvrant selon la revendication 1, **caractérisé en ce que** le pare-soleil (4) comprend une position centrale (9) qui présente une transmission de lumière variable et un châssis (10) qui entoure ladite portion centrale, ledit châssis consiste en un matériau qui ne présente pas de transmission de lumière variable.

4. Ensemble de toit ouvrant selon la revendication 3, **caractérisé en ce que** la portion centrale (9) peut être détachée de la portion périphérique (10).

5. Ensemble de toit ouvrant selon l'une quelconque des revendications précédentes, **caractérisé en ce que** la transmission de lumière peut être variée automatiquement.

6. Ensemble de toit ouvrant selon la revendication 5, **caractérisé en ce que** l'on fait varier la transmission de lumière sur la base de la valeur des quantités mesurées à l'intérieur du véhicule, comme par exemple l'intensité lumineuse ou la température.

7. Ensemble de toit ouvrant selon l'une quelconque des revendications précédentes, **caractérisé en ce que** l'on fait varier manuellement la transmission de lumière.

8. Ensemble de toit ouvrant selon l'une quelconque des revendications précédentes, **caractérisé en ce que** le matériau présentant une transmission de lumière variable est un matériau électrochromatique.

9. Ensemble de toit ouvrant selon l'une quelconque des revendications 1 à 7, **caractérisé en ce que** le matériau qui présente une transmission de lumière variable consiste en des filtres de polarisation (11, 12) disposés en relation côte à côte et qui peuvent être mis en pivotement l'un par rapport à l'autre.
